(19) Europäisches Patentamt

European Patent Office

Office européen des brevets

(11) **EP 3 292 178 B1**

(12) **EUROPEAN PATENT SPECIFICATION**

(45) Date of publication and mention
of the grant of the patent:
**25.08.2021 Bulletin 2021/34**

(21) Application number: **16726224.5**

(22) Date of filing: **05.05.2016**

(51) Int Cl.:
*C09J 151/06* (2006.01)     *C08L 23/14* (2006.01)
*C08L 51/06* (2006.01)     *B32B 5/02* (2006.01)
*B32B 7/12* (2006.01)     *B32B 25/10* (2006.01)
*C08L 91/00* (2006.01)

(86) International application number:
**PCT/US2016/030924**

(87) International publication number:
**WO 2016/179364 (10.11.2016 Gazette 2016/45)**

(54) **FUNCTIONALIZED, HALOGENATED OLEFIN-BASED ADHESIVE, ARTICLES CONTAINING THE SAME, AND PROCESS FOR USING THE SAME**

FUNKTIONALISIERTER HALOGENIERTER OLEFINBASIERTER KLEBSTOFF, ARTIKEL DAMIT UND VERFAHREN ZUR VERWENDUNG DAVON

ADHÉSIF OLÉFINIQUE HALOGÉNÉ ET FONCTIONNALISÉ, ARTICLES EN CONTENANT ET SON PROCÉDÉ D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2015 CN 201500078265**

(43) Date of publication of application:
**14.03.2018 Bulletin 2018/11**

(73) Proprietor: **Dow Global Technologies LLC**
**Midland, MI 48674 (US)**

(72) Inventors:
• **LIPISHAN, Colin**
  **Lake Jackson, TX 77566 (US)**
• **WU, Hang**
  **Schanghai 201203 (CN)**
• **NGUYEN, Lena, T.**
  **Freeport, TX 77541 (US)**

(74) Representative: **Boult Wade Tennant LLP**
**Salisbury Square House**
**8 Salisbury Square**
**London EC4Y 8AP (GB)**

(56) References cited:
**WO-A2-2007/146875     US-A1- 2003 096 907**
**US-A1- 2009 324 867**

**Description**

FIELD OF THE INVENTION

This invention relates to adhesives. In one aspect the invention relates to functionalized, halogenated olefin-based polymer adhesives, while in another aspect, the invention relates to binding a fabric to a rubber substrate with the adhesive. In yet another aspect the invention relates to articles made from the rubber substrate with the bonded fabric.

BACKGROUND OF THE INVENTION

Many belts and hoses comprise an assembly of a rubber substrate, e.g., a natural or synthetic rubber substrate, bonded to a fabric, i.e., a woven or knitted material, typically of cotton. The ease of construction of these belts and hoses varies with the composition of the substrates and fabric. While all rubber substrates typically need some form of assist in forming durable bonds with a fabric of one kind or another, e.g., an adhesive and/or the surface treatment of one or both of the rubber substrate and fabric, some rubber substrates need more of an assist than other rubber substrates. Substrates of natural rubber or polychloroprene exhibit good building tack, i.e., self-adhesion, to cotton fabric while substrates comprising an ethylene/propylene/diene monomer (EPDM) polymer and/or a polyolefin elastomer (POE) exhibit relatively poor building tack to cotton fabric, and this poor building tack is a significant obstacle in the construction of belts and hoses from EPDM polymers and/or POE and cotton fabric. Of continuing interest to the manufacturers of belts and hoses are adhesives that provide good strong bonding between EPDM and/or POE substrates and fabric, particularly cotton fabric.
WO 2007/146875 discloses compositions containing at least one functionalized polyolefin, and in particular, compositions containing at least one functionalized ethylene interpolymer, which has a melt viscosity less than 50,000 cP at 350°F (177°C) and a molecular weight distribution (Mw/Mn) from about 1 to 5. The disclosure also provides adhesive formulations containing the same. The disclosure also relates to the preparation of the functionalized interpolymers, by reacting, for example, such an ethylene interpolymer with the following: a) at least one unsaturated compound, containing at least one heteroatom, and b) at least one initiator.
US-A-2003/096907 relates to a binder resin composition comprising a mixture of carboxyl group-containing chlorinated polyolefin (I) and an ethylene-vinyl acetate copolymer (II), wherein said carboxyl group-containing chlorinated polyolefin (I) comprises from 1 to 10 wt% of at least one unsaturated carboxylic acid monomer or carboxylic anhydride grafted to said carboxyl group-containing chlorinated polyolefin (I) and from 5 to 50 wt% chlorine.
Other compositions are disclosed in the following references: EP 1 006 234 A1; USP 7,256,235; USP 7,737,208; US 2002/0032284; US 2003/0212209 and US 2006/0074181.

SUMMARY OF THE INVENTION

In one embodiment the invention is a composition comprising at least the following:

(A) A functionalized, halogenated olefin-based polymer having a melt index (12, 190C/2.16) greater than, or equal to, 30 grams per 10 minutes (g/10 min); and
(B') An olefin-based polymer having a density from 0.855 to 0.900 grams per cubic centimeter (g/cc) and a weight average molecular weight (Mw) of less than, or equal to, 60,000 grams per mole (g/mol),

wherein the olefin-based polymer of component B' is an amorphous polyolefin (APO),
wherein the term "functionalized halogenated olefin-based polymer," refers to an olefin-based polymer comprising at least one halogen, and at least one chemical group selected from the following: anhydride, carboxylate, -COOH, amine, OH, carbonyl, acrylate, or combinations thereof.
A process of forming a laminate comprising a rubber substrate and a fabric can be provided, the process comprising the following steps of:

(1) Applying to a surface of the rubber substrate, or to a surface of the fabric, the composition of any one of the previous claims;
(2) Contacting the surface of the rubber substrate or the surface of the fabric, to which the composition has been applied, to a surface of the other component, to form the laminate; and
(3) Applying pressure to the laminate.

An article made by the process described in the preceding paragraph can be provided.

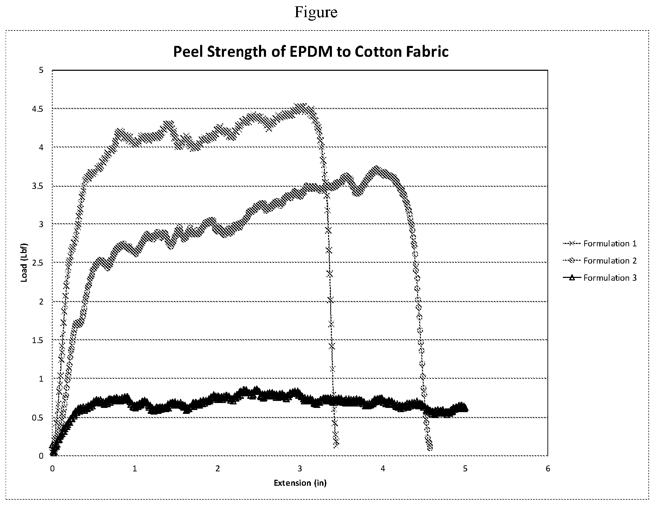

BRIEF DESCRIPTION OF THE FIGURE

The Figure is a line graph reporting the peel strength of EPDM to cotton fabric.

DETAILED DESCRIPTION OF THE PREFERRED EMBODIMENT

Unless stated to the contrary, implicit from the context, or customary in the art, all parts and percents are based on weight, and all test methods are current as of the filing date of this disclosure.

The term "composition," as used herein, includes the material(s), which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure) and the term interpolymer as defined hereinafter. Trace amounts of impurities, such as catalyst residues, can be incorporated into and/or within the polymer.

The term "interpolymer," as used herein, refers to polymers prepared by the polymerization of at least two different types of monomers. The term interpolymer thus includes the term copolymer (employed to refer to polymers prepared from two different types of monomers) and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term "ethylene-based polymer," as used herein, refers to a polymer that comprises, in polymerized form, a majority weight percent of ethylene (based on the weight of the polymer), and optionally may comprise one or more comonomers.

The term, "propylene-based polymer," as used herein, refers to a polymer that comprises, in polymerized form, a majority amount of propylene monomer (based on the weight of the polymer), and optionally may comprise one or more comonomers.

The term "ethylene-based interpolymer," as used herein, refers to a polymer that comprises, in polymerized form, a majority weight percent of ethylene (based on the weight of the interpolymer), and at least one comonomer.

The term "propylene-based interpolymer," as used herein, refers to a polymer that comprises, in polymerized form, a majority weight percent of propylene (based on the weight of the interpolymer), and at least one comonomer.

The term "halogenated olefin-based polymer," as used herein, refers to an olefin-based polymer comprising at least one halogen (for example, chlorine).

The term "functionalized, halogenated olefin-based polymer," as used herein, refers to an olefin-based polymer comprising at least one halogen, and at least one chemical group selected from the following: anhydride, carboxylate, -COOH, amine, OH, carbonyl, acrylate, or combinations thereof.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of " excludes from the scope of any succeeding recitation any other component, step or procedure, excepting those that are not essential to operability. The term "consisting of " excludes any component, step or procedure not specifically delineated or listed.

*Olefin-Based Polymer Before Halogenation and Functionalization*

As discussed above, an "olefin-based polymer," and like terms, mean a polymer containing, in polymerized form, a majority weight percent of olefin, for example ethylene, propylene and/or butene, based on the total weight of the polymer. Non-limiting examples of olefin-based polymers include ethylene-based polymers and propylene-based polymers in which ethylene or propylene, respectively, comprises the majority weight percent of the polymer. Olefin-based polymers include both homopolymers and interpolymers. Olefin-based homopolymers consist of a single olefin in polymerized form, e.g., ethylene homopolymer or propylene homopolymer. Olefin-based interpolymers are polymers prepared by the polymerization of at least two different olefin monomers. "Olefin interpolymer" includes "olefin copolymers", usually employed to refer to olefin polymers prepared from two different olefin monomers, and polymers prepared from more than two different olefin monomers, e.g., terpolymers, tetrapolymers, etc.

In one embodiment the functionalized, halogenated olefin-based polymer component of the compositions of this invention is a functionalized, halogenated ethylene-based polymer. In another embodiment the functionalized, halogenated olefin-based polymer component of the compositions of this invention is a functionalized, halogenated propylene-based polymer.

*Ethylene-Based Polymer Before Halogenation and Functionalization*

"Ethylene-based polymer" and like terms means a polymer containing, in polymerized form, a majority weight percent of units derived from ethylene based on the total weight of the polymer. Nonlimiting examples of ethylene-based polymers include low density polyethylene (LDPE), linear low density polyethylene (LLDPE), very low density polyethylene (VLDPE), ultra-low density polyethylene (ULDPE), medium density polyethylene (MDPE), and high density polyethylene (HDPE). The term "ethylene-based interpolymer" refers to an interpolymer that comprises a majority amount of polymerized ethylene, based on the weight of the interpolymer, and at least one comonomer.

In one embodiment, the olefin-based polymers used in preparation of the functionalized, halogenated olefin-based polymers are interpolymers of ethylene and at least one suitable comonomer. In a preferred embodiment, the halogenated ethylene interpolymer is functionalized with at least one unsaturated compound containing at least one heteroatom. In yet another embodiment, the at least one unsaturated compound, containing at least one heteroatom, is a carbonyl-containing compound, and more preferably maleic anhydride. In one embodiment the ethylene interpolymer is halogenated with chlorine. Preferably the ethylene interpolymer is an ethylene/alpha-olefin interpolymer.

In one embodiment, the ethylene-based interpolymers used in preparation of the functionalized, halogenated interpolymers of the invention have a molecular weight distribution (MWD, Mw/Mn) less than, or equal to, 5.0, or less than, or equal to, 4.0. In another embodiment, the ethylene interpolymer has a MWD greater than, or equal to, 1.1, or less than, or equal to, 1.3, or less than, or equal to, 1.5. More or the ethylene/alpha-olefin interpolymers have a molecular weight distribution from about 1 to 5, or 1.1 to 5.0, or from 1.1 to 4.0, or from about 1.1 to 3.5 or from about 1.1 to 3.0. All individual values and subranges from 1.1 to 5.0 are included herein and disclosed herein. Preferably the ethylene interpolymer is an ethylene/alpha-olefin interpolymer.

In another embodiment, the ethylene-based interpolymer has a MWD less than, or equal to, 3.5, or less than, or equal to, 3.0, or less than, or equal to, 2.5. In another embodiment, the ethylene interpolymer has a MWD greater than, or equal to, 1.1, or greater than, or equal to, 1.5, and more or greater than, or equal to, 1.8. Preferably the ethylene interpolymer is an ethylene/alpha-olefin interpolymer.

Preferred comonomers include, but are not limited to, propylene, isobutylene, 1-butene, 1-pentene, 1-hexene, 3-methyl-1-pentene, 4-methyl-1-pentene, 1-heptene and 1-octene, non-conjugated dienes, polyenes, butadienes, isoprenes, pentadienes, hexadienes (e.g., 1,4-hexadiene), octadienes, decadienes (for example, 1,9-decadiene), styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one C3-C20 alpha-olefin, and more preferably a C3-C10 alpha-olefin. Preferred alpha-olefins include propylene, 1-butene, 1-hexene and 1-octene, and more preferably propylene and 1-octene.

In another embodiment, the ethylene interpolymers, used in preparation of the functionalized, halogenated interpolymers, have a melt viscosity from 2,000 cP to 100,000 centipoise (cP). All individual values and subranges from 2,000 cP to 100,000 cP are included and disclosed herein. Melt viscosity is measured using a Brookfield viscometer at 350°F (177°C). Preferably, the melt viscosity is from 3,000 cP, or 4,000 cP, or 5,000 cP to 80,000 cP or 60,000 cP, or 50,000 cP, or 40,000 cP, or 30,000 cP, or 20,000 cP, or 15,000 cP. Preferably the ethylene interpolymer is an ethylene/alpha-olefin interpolymer.

In another embodiment, the ethylene-based interpolymers, used in preparation of the functionalized, halogenated interpolymers, have a melt index (12) from 200 grams per 10 minutes (g/10 min), or 300 g/10 min, or 400 g/10 min to 3,500 g/10 min, to 3500 g/10 min, or 3,000 g/10 min, or 2500 g/10 min, preferably from 300 g/10 min to 2,000 g/10 min, and more preferably from 400 g/10 min to 1,500 g/10 min, as determined using ASTM D-1238 (190°C, 2.16 kg load). Preferably the ethylene interpolymer is an ethylene/alpha-olefin interpolymer.

In another embodiment, the ethylene interpolymers, used in preparation of the functionalized, halogenated interpolymers of the invention, have a number average molecular weight (Mn) from 4,000 to 30,000, preferably from 5,000 to 25,000, more preferably from 5,000 to 15,000, and even more preferably from 6,000 to 14,000. All individual values and subranges from 4,000 to 30,000 are included herein and disclosed herein. All molecular weights, as disclosed herein, have the unit "g/mole." Preferably the ethylene interpolymer is an ethylene/alpha-olefin interpolymer.

In another embodiment, the ethylene-based interpolymers, used in preparation of the functionalized, halogenated interpolymers of the invention, have a weight average molecular weight (Mw) from 8,000 to 60,000, or from 10,000 to 50,000, or from 12,000 to 30,000. All individual values and subranges are included in the range 8,000 to 60,000, and disclosed herein. All molecular weights, as disclosed herein, have the unit "g/mole." Preferably the ethylene interpolymer is an ethylene/alpha-olefin interpolymer.

In another embodiment, the ethylene interpolymers, used in preparation of the functionalized, halogenated interpolymers of the invention, have a weight average molecular weight less than 40,000, or less than 30,000, or less than 25,000 g/mole. Preferably the ethylene interpolymer is an ethylene/alpha-olefin interpolymer.

In another embodiment, the ethylene-based interpolymers, used in preparation of the functionalized, halogenated interpolymers of the invention, have a weight average molecular weight greater than 8,000, or greater than 9,000, or greater than 10,000 g/mole. Preferably the ethylene interpolymer is an ethylene/.alpha.-olefin interpolymer.

In another embodiment, the ethylene interpolymers, used in preparation of the functionalized, halogenated interpolymers of the invention, have a percent crystallinity of less than, or equal to, 50 percent, or less than, or equal to, 40 percent, or less than, or equal to, 25 percent, or less than, or equal to, 10 percent as measured by DSC. In another embodiment, the ethylene interpolymers, have a percent crystallinity of greater than, or equal to, 2 percent, or greater than, or equal to, 5 percent, as measured by DSC. Preferably, these interpolymers have a percent crystallinity from 2 percent to 50 percent, including all individual values and subranges from 2 percent to 50 percent. Such individual values and subranges are included herein and disclosed herein. Preferably the ethylene interpolymer is an ethylene/alpha-olefin interpolymer.

In another embodiment, the ethylene-based interpolymers, used in preparation of the functionalized, halogenated interpolymers of the invention, have a comonomer incorporation in the final polymer greater than 2 mole percent, or greater than 3 mole percent, based on the total moles of polymerizable monomers (monomer plus comonomer(s)). The amount of comonomer incorporation can be greater than 6 mole percent, and can even be greater than 10 mole percent, based on the total moles of polymerizable monomers. Preferably the ethylene interpolymer is an ethylene/alpha-olefin interpolymer.

In another embodiment, the ethylene-based interpolymers, used in preparation of the functionalized, halogenated interpolymers of the invention, have a density from 0.855 grams per cubic centimeter (g/cc) to 0.93 g/cc, and or from 0.86 g/cc to 0.90 g/cc, or from 0.865 g/cc to 0.895 g/cc. All individual values and subranges from 0.855 g/cc to 0.93 g/cc are included herein and disclosed herein. Preferably the ethylene interpolymer is an ethylene/alpha-olefin interpolymer.

In another embodiment, the ethylene-based interpolymer, used in preparation of the functionalized, halogenated interpolymers of the invention, has a density less than 0.900 g/cc, or less than 0.890 g/cc, or less than 0.880 g/cc. In another embodiment, the ethylene interpolymer, used in preparation of the functionalized, halogenated interpolymers of the invention, has a density greater than 0.850 g/cc, or greater than 0.855 g/cc, or greater than 0.860 g/cc. Preferably the ethylene interpolymer is an ethylene/.alpha.-olefin interpolymer.

Examples of ethylene-based interpolymers suitable for the invention include the AFFINITY™ and ENGAGE™ interpolymers, available from The Dow Chemical Company. Other examples of ethylene/alpha-olefin interpolymers suitable for the invention include the low molecular weight ethylene-based interpolymers described in USP 6,335,410, 6,054,544 and 6,723,810. The entire contents of each of these patents are incorporated herein by reference. Other suitable interpolymers include ethylene-alpha-olefin block copolymers and interpolymers, and other ethylene based block copolymers and interpolymers known in the art.

The ethylene-based interpolymers used in preparation of the functionalized, halogenated interpolymers may be "homogeneous" or "homogeneously branched" interpolymers prepared using the constrained geometry catalysts, as disclosed in USP 5,272,236; 5,278,272; 5,064,802; 5,132,380; 5,703,187; 6,034,021; 5,321,106 (EP 0 468 651); 6,118,013 (EP 0 514 828); and WO 93/19104 (USP 5,374,696; 5,532,394; 5,723,398); and WO 95/00526 (USP 5,470,993; 5,556,928; 5,624,878). Another suitable class of catalysts, used to prepare such interpolymers, is the bis-metallocene catalysts, disclosed in USP 5,044,438; 5,057,475; 5,096,867; and 5,324,800. The constrained geometry catalysts and the bis-metallocene catalysts are both sometimes referred to as "single-site catalysts."

In one embodiment, the ethylene-based interpolymer is a homogeneously branched linear interpolymer or a homogeneously branched substantially linear interpolymer. In another embodiment, the ethylene interpolymer is a homogeneously branched substantially linear interpolymer. In a further embodiment, the ethylene-based interpolymer is a homogeneously branched substantially linear interpolymer with an I10/I2 ratio from 7 to 10, or from 8 to 10. Preferably the ethylene-based interpolymer is an ethylene/alpha-olefin interpolymer.

In another embodiment, the ethylene-based interpolymer is prepared using a single-site catalyst. In a further embodiment, the ethylene-based interpolymer is prepared using a constrained geometry catalyst. Preferably the ethylene-based interpolymer is an ethylene/alpha-olefin interpolymer.

In another embodiment, the ethylene-based interpolymer contains greater than 55 mole percent ethylene, or greater than 60 mole percent ethylene, based on the total moles of polymerizable monomers. Preferably the ethylene interpolymer is an ethylene/alpha-olefin interpolymer.

The ethylene-based interpolymers, used in preparation of the functionalized, halogenated interpolymers, may be polymerized in two reactors, with a first polymer being polymerized in a first reactor, and a second polymer (of higher or lower molecular weight, and/or of different density, and/or, which is heterogeneous) being polymerized in a second reactor, which is connected in series, or in parallel, to the reactor in which the first polymer is produced. Such a dual polymerization is used to prepare in-reactor polymer blends having desirable properties. An example of this is disclosed in WO 94/00500. Additionally, dual catalysts may be used in polymerizations in one or more reactors as discussed in WO2005/028584A1.

An ethylene-based polymer may comprise a combination of two or more embodiments as described herein.

An ethylene-based interpolymer may comprise a combination of two or more suitable embodiments as described herein.

An ethylene/alpha-olefin interpolymer may comprise a combination of two or more suitable embodiments as described herein.

*Propylene-Based Polymer Before Halogenation and Functionalization*

In another embodiment, the olefin-based polymer is a propylene-based polymer, and further a propylene-based interpolymer. For example, propylene-based interpolymers, containing at least 50 mole percent polymerized propylene (based on the total moles of polymerizable monomers), fall within the invention. Suitable polypropylene base interpolymers include VERSIFY™ interpolymers (The Dow Chemical Company) and VISTAMAXX™ interpolymers (ExxonMobil Chemical Co.), LICOCENE™ interpolymers (Clariant), EASTOFLEX™ interpolymers (Eastman Chemical Co.), REXTAC™ interpolymers (Huntsman), and VESTOPLAST™ interpolymers (Degussa). Other suitable interpolymers include propylene-alpha-olefin block copolymers and interpolymers, and other propylene based block copolymers and interpolymers known in the art. Other suitable propylene polymers are described in WO 2006/069205.

The propylene-based interpolymers, used in preparation of the functionalized, halogenated interpolymers, of the invention have a molecular weight distribution (MWD) less than, or equal to, 5.0, and or less than, or equal to, 4.0. Or the propylene interpolymers have a MWD from about 1.1 to 5.0, or from about 1.1 to 4.0, or from about 1.1 to 3.5, or about 1.1 to 3.0. In another embodiment, the propylene interpolymers have a MWD greater than, or equal to, 1.1, or greater than, or equal to, 1.5. All individual values and subranges from about 1.1 to 5.0 are included herein and disclosed herein. Preferably the propylene interpolymer is a propylene/alpha-olefin interpolymer or propylene/ethylene interpolymer. In one embodiment, the propylene interpolymer is a propylene/alpha-olefin interpolymer. In another embodiment, the propylene interpolymer is a propylene/ethylene interpolymer.

The propylene/alpha-olefin interpolymers, used in preparation of the functionalized, halogenated interpolymers, are interpolymers of propylene and at least one suitable comonomer. Preferred comonomers include, but are not limited to, ethylene, isobutylene, 1-butene, 1-pentene, 1-hexene, 3-methyl-1-pentene, 4-methyl-1-pentene, and 1-octene, non-conjugated dienes, polyenes, butadienes, isoprenes, pentadienes, hexadienes (e.g., 1,4-hexadiene), octadienes, decadienes (e.g., 1,9-decadiene), styrene, halo-substituted styrene, alkyl-substituted styrene, tetrafluoroethylenes, vinylbenzocyclobutene, naphthenics, cycloalkenes (for example, cyclopentene, cyclohexene, cyclooctene), and mixtures thereof. Typically and preferably, the comonomer is ethylene or a C4-C20 alpha-olefin, more preferably ethylene or a C4-C10 alpha-olefin, and even more preferably ethylene.

Preferably the propylene-based interpolymer is a propylene/alpha-olefin interpolymer or propylene/ethylene interpolymer. In one embodiment, the propylene-based interpolymer is a propylene/alpha-olefin interpolymer. In another embodiment, the propylene interpolymer is a propylene/ethylene interpolymer.

In another embodiment, the propylene/alpha-olefin interpolymers, used in preparation of the functionalized, halogenated interpolymers of the invention, have a percent crystallinity of less than, or equal to, 60 percent, or less than, or equal to, 40 percent, or less than, or equal to, 35 percent, or less than, or equal to, 20 percent, as measured by DSC. In another embodiment, the propylene/alpha-olefin interpolymers have a percent crystallinity of greater than, or equal to, 2 percent, or greater than, or equal to, 2 percent, as measured by DSC. Preferably, these interpolymers have a percent crystallinity from 2 percent to 60 percent, including all individual values and subranges from 2 percent to 60 percent. Such individual values and subranges are included herein and disclosed herein. Preferably the propylene interpolymer is a propylene/alpha-olefin interpolymer or propylene/ethylene interpolymer. In one embodiment, the propylene interpolymer is a propylene/alpha-olefin interpolymer. In another embodiment, the propylene interpolymer is a propylene/ethylene interpolymer.

In another embodiment, the propylene-based interpolymers, used in preparation of the functionalized, halogenated interpolymers, have a comonomer incorporation in the final polymer greater than 2 mole percent, or greater than 3 mole percent, based on the total moles of polymerizable monomers. The amount of comonomer incorporation can be greater than 6 mole percent, and can even be greater than 10 mole percent, based on the total moles of polymerizable monomers. Preferably the propylene interpolymer is a propylene/alpha-olefin interpolymer or propylene/ethylene interpolymer. In one embodiment, the propylene interpolymer is a propylene/alpha-olefin interpolymer. In another embodiment, the propylene interpolymer is a propylene/ethylene interpolymer.

In another embodiment, the propylene-based interpolymers used in preparation of the functionalized, halogenated interpolymers, have a density from 0.855 grams per cubic centimeter g/cc to 0.895 g/cc, or from 0.86 g/cc to 0.89 g/cc, or from 0.86 g/cc to 0.88 g/cc. All individual values and subranges from 0.855 g/cc to 0.895 g/cc, are included herein and disclosed herein. Preferably the propylene interpolymer is a propylene/alpha-olefin interpolymer or propylene/ethylene interpolymer. In one embodiment, the propylene interpolymer is a propylene/alpha-olefin interpolymer. In another embodiment, the propylene interpolymer is a propylene/ethylene interpolymer.

In another embodiment, the propylene-based interpolymers used in preparation of the functionalized, halogenated interpolymers, have a density less than, or equal to, 0.895 g/cc, or less than, or equal to, 0.89 g/cc, or less than, or equal to, 0.88 g/cc. In another embodiment, the propylene interpolymers used in preparation of the functionalized, halogenated interpolymers, have a density greater than, or equal to, 0.855 g/cc, or greater than, or equal to, 0.86 g/cc, or greater than, or equal to, 0.865 g/cc. Preferably the propylene interpolymer is a propylene/alpha-olefin interpolymer or propylene/ethylene interpolymer. In one embodiment, the propylene interpolymer is a propylene/alpha-olefin interpolymer. In another embodiment, the propylene interpolymer is a propylene/ethylene interpolymer.

In another embodiment, the propylene/alpha-olefin interpolymers or propylene/ethylene interpolymers, used in preparation of the functionalized, halogenated interpolymers, have a melt viscosity less than 100,000 centipoise (cP), or 70,000 cP, or 60,000 cP, or 50,000 cP, or 40,000 cP, or 30,000 cP, or 20,000 cP, or 15,000 cP to greater than 250 cP, or 500 cP, or 1,000 cP, or 2,000 cP or 5,000 cP. All individual values and subranges from 250 cP to 100,000 cP are included herein and disclosed herein. Melt viscosity is measured using a Brookfield viscometer at 350°F (177°C). Preferably, the melt viscosity is from 400 cP to 40,000 cP, and more preferably from 500 cP to 30,000 cP. Preferably the propylene interpolymer is a propylene/alpha-olefin interpolymer or propylene/ethylene interpolymer.

In another embodiment, the propylene-based interpolymers used in preparation of the functionalized, halogenated interpolymers of the invention, have a number average molecular weight (Mn) from 3,000 to 35,000, or from 5,000 to 30,000, or from 6,000 to 25,000. All individual values and subranges from 3,000 to 35,000 are included herein and disclosed herein. All molecular weights, as disclosed herein, have the unit "g/mole." Preferably the propylene interpolymer is a propylene/alpha-olefin interpolymer or propylene/ethylene interpolymer.

In another embodiment, the propylene-based interpolymers used in preparation of the functionalized, halogenated interpolymers of the invention, have a weight average molecular weight (Mw) from 6,000 to 105,000, or from 10,000 to 90,000, or from 12,000 to 60,000, or from 12,000 to 30,000. All individual values and subranges from 6,000 to 105,000 are included and disclosed herein. All molecular weights, as disclosed herein, have the unit "g/mole." Preferably the propylene interpolymer is a propylene/alpha-olefin interpolymer or propylene/ethylene interpolymer.

A propylene-based polymer may comprise a combination of two or more embodiments as described herein.

A propylene-based interpolymer may comprise a combination of two or more suitable embodiments as described herein.

A propylene/alpha-olefin interpolymer may comprise a combination of two or more suitable embodiments as described herein.

A propylene/ethylene interpolymer may comprise a combination of two or more suitable embodiments as described herein.

*Olefin-Based Polymer After Functionalization and Halogenation*

*Halogenation*

The olefin-based polymers used in the practice of this invention are halogenated in addition to being functionalized as described above. The olefin-based polymer can be halogenated before, after or simultaneously with the functionalization of the polymer. Typically, and/or, the olefin-based polymer is first halogenated, and then functionalized. The halogen used in the halogenation of the olefin-based polymer is typically chlorine and/or bromine, more typically chlorine.

The polymers disclosed herein may be halogenated with any of a variety of reagents, including elemental chlorine and/or bromine, and the halogenated product then reacted with any of a variety of compounds containing functionality, for example, maleic anhydride, to obtain a functionalized, halogenated olefin-based polymer. In one embodiment, the halogen can be introduced into the olefin-based polymer as a monomer, e.g., vinyl chloride, that is polymerized directly into the polymer backbone, e.g., polyvinylchloride. The halogenation of olefin-based polymers is well known in the art, e.g., USP 2.926,159 and Polymer Journal, Vol. 37, No.9, pp661-668 (2005).

The halogen content of the functionalized, halogenated olefin-based polymer used in the practice of this invention typically comprises less than or equal to 30 weight percent (wt%), or 25 wt%, or 20 wt%, or 15 wt%, or 12wt%, or 9 wt% halogen to more than or equal to 1 wt%, or 2 wt%, or 3 wt%, or 4 wt% or 5 wt%, based on the weight of the functionalized, halogenated olefin-based polymer. In one embodiment the halogen content of the functionalized, halogenated olefin-based polymer is between 1 and 30 wt%, or 2 and 22 wt%, or 3 and 15 wt% , or 1 to 10 wt. All individual values and subranges from 1 to 30 wt% are included herein and disclosed herein.

*Functionalization*

The invention provides functionalized polymers, as described herein, and provides for compositions comprising the same. The polymers, as described herein, may be functionalized to introduce functionality to, among other things (e.g., enhance compatibility with other polymers, further reactivity with other polymers, etc.), enhance adhesion properties and/or interfacial activity.

The introduction of certain functionalities may change the interfacial characteristics of the base polymers, i.e., the olefin-based polymers before functionalization (and typically, but not necessarily, before halogenation), and this will typically lead to enhanced interfacial activity, which is often manifested in improved properties, such as paintability, toughening, compatibilization, adhesion and adhesion in tie layers.

The olefin-based polymers disclosed herein may be modified by typical grafting, hydrogenation, nitrene insertion, epoxidation, or other functionalization reactions, well known to those skilled in the art. Preferred functionalizations are grafting reactions using a free radical mechanism or ROMP (ring opening metathesis) or RAFT (reversible addition-fragmentation chain transfer mechanism.

Functionalization may occur before, after or simultaneously with halogenation.

A variety of radically graftable species may be attached to the polymer, either individually, or as relatively short grafts. These species include unsaturated molecules, each containing at least one heteroatom. These species include, but are not limited to, maleic anhydride, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, and the respective esters, imides, salts, and Diels-Alder adducts of these compounds. Maleic anhydride is a preferred grafting species.

Other radically graftable species may be attached to the polymer, individually, or as short-to-longer grafts. These species include, but are not limited to, methacrylic acid; acrylic acid; Diels-Alder adducts of acrylic acid; methacrylates including methyl, ethyl, butyl, isobutyl, ethylhexyl, lauryl, stearyl, hydroxyethyl, and dimethylaminoethyl; acrylates including methyl, ethyl, butyl, isobutyl, ethylhexyl, lauryl, stearyl, and hydroxyethyl; glycidyl methacrylate and vinyl chloride.

Mixtures of radically graftable species that comprise at least one of the above species may be used, with styrene/maleic anhydride and styrene/acrylonitrile as illustrative examples.

A thermal grafting process is one method for reaction; however, other grafting processes may be used, such as photo initiation, including different forms of radiation, e-beam, or redox radical generation.

The functionalized interpolymers disclosed herein may also be modified by various chain extending or crosslinking processes, including, but not limited to peroxide-, sulfur-, radiation-, or azide-based cure systems. A full description of the various crosslinking technologies is described in USP 5,869,591 and USP 5,977,271.

For cured resins, suitable curing agents may include peroxides, phenols, azides, aldehyde-amine reaction products, substituted ureas, substituted guanidines; substituted xanthates; substituted dithiocarbamates; sulfur-containing compounds, such as thiazoles, imidazoles, sulfenamides, thiuramidisulfides, paraquinonedioxime, dibenzoparaquinonedioxime, sulfur; and combinations thereof. Elemental sulfur may be used as a crosslinking agent for diene containing polymers.

In some systems crosslinking may be promoted with a crosslinking catalyst, and any catalyst that will provide this function can be used in this invention. These catalysts generally include acids and bases, especially organic bases, carboxylic acids and sulfonic acids, and organometallic compounds, including organic titanates, organic zirconates, and complexes or carboxylates of lead, cobalt, iron, nickel, zinc and tin. Dibutyltin dilaurate, dioctyltin maleate, dibutyltin diacetate, dibutyltin dioctoate, stannous acetate, stannous octoate, lead naphthenate, zinc caprylate, cobalt naphthenate, and the like, are examples of suitable crosslinking catalysts.

Rather than employing a chemical crosslinking agent, crosslinking may be effected by use of radiation or by the use of electron beam. Useful radiation types include ultraviolet (UV) or visible radiation, beta ray, gamma rays, X-rays, or neutron rays. Radiation is believed to effect crosslinking by generating polymer radicals which may combine and crosslink.

Crosslinking during the curing stage is important. It can help adhere the fabric/adhesive to the rubber. Useful temperatures to initiate crosslinking are typically in excess of 100°C under atmospheric pressure, or steam conditions, or hot air, or salt bath, or exposure to microwaves, or a combination of two or more of these techniques.

Dual cure systems, which use a combination of heat, moisture cure, and radiation steps, may be effectively employed. Dual cure systems are disclosed in USP 5,911,940 and 6,124,370. For example, it may be desirable to employ peroxide crosslinking agents in conjunction with silane crosslinking agents; peroxide crosslinking agents in conjunction with radiation; or sulfur-containing crosslinking agents in conjunction with silane crosslinking agents.

The low molecular weight polymers disclosed herein may also be modified by various other crosslinking processes, including, but not limited to, the incorporation of a diene component, as a termonomer, in their preparations, and subsequent crosslinking by the aforementioned methods, and further methods, including vulcanization via the vinyl group, using sulfur, for example, as the cross linking agent.

The functionalization may also occur at the terminal unsaturated group (e.g., vinyl group) or an internal unsaturation group, when such groups are present in the polymer. Such functionalization includes, but is not limited to, hydrogenation, ozonation, hydroxylation, sulfonation, carboxylation, epoxidation, and grafting reactions. Any functional groups, such as amine, amide, ester, carboxylic acid, ether and so on, or functional unsaturated compounds, such as maleic anhydride, can be added across a terminal or internal unsaturation via known chemistry. Other functionalization methods include those disclosed in the following USP 5,849,828, USP 5,814,708, and USP 5,717,039.

Sulfonation can be conducted according to the methods disclosed in the following USP 5,753,774; 5,723,550; 5,030,399; 4,532,302; 4,308,215; 4,184,988; 4,157,432; and 4,148,821.

In one embodiment, a preferred embodiment, the olefin-based polymer is functionalized with maleic anhydride by grafting maleic moieties to residual unsaturations in the polymer chain and/or to saturated groups in the polymer chain. In one embodiment the olefin-based polymer is an ethylene-based polymer. Preferably, the maleic anhydride-grafted ethylene interpolymer is formed from an ethylene/.alpha.-olefin interpolymer (base polymer).

In one embodiment, the amount of maleic anhydride used in the grafting reaction is greater than, or equal to, one weight percent, based on the total weight of the reactive composition, and the weight ratio of maleic anhydride to initiator, is from 10:1 to 500:1, preferably from 20:1 to 400:1, and more preferably from 30:1 to 300:1. The individual ratios and subranges from 10:1 to 500:1 are included herein and disclosed herein. In another embodiment, the weight ratio of maleic anhydride to initiator, is from 10:1 to 50:1. These ratios of maleic anhydride to initiator, balanced with the grafting efficiency of the reaction, have resulted in maleic anhydride-grafted polymers that provide good adhesion properties.

In another embodiment, the amount of maleic anhydride, used in the grafting reaction, is less than, or equal to, 10 wt% (based on the weight of the reactive composition), or less than 5 wt%, or from 0.5 to 10 wt%, or from 0.5 to 5 wt%. All individual values and subranges from 0.05 wt% to 10 wt% are included herein and disclosed herein.

In another embodiment, the amount of maleic anhydride constituent grafted on the polyolefin chain (for example, ethylene interpolymer or propylene interpolymer) is greater than 0.05 wt% (based on the weight of the olefin interpolymer), as determined by titration analysis, FTIR analysis, or any other appropriate method. In a further embodiment, this amount is greater than 0.25 wt%, and in yet a further embodiment, this amount is greater than 0.5 wt%. In a preferred embodiment, 0.1 wt% to 5 wt% of maleic anhydride is grafted. All individual values and subranges greater than 0.05 wt% are considered within the scope of this invention, and are disclosed herein. Or, the maleic anhydride-grafted ethylene interpolymer is formed from an ethylene/alpha-olefin interpolymer (base polymer).

The maleic anhydride, as well as many other unsaturated heteroatom containing species, may be grafted to the interpolymer by any conventional method, typically in the presence of a free radical initiator, for example the peroxide and azo classes of compounds, etc., or by ionizing radiation. Organic initiators are preferred, such as any one of the peroxide initiators, such as, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di(tert-butyl peroxy)hexane, 2,5-dimethyl-2,5-di(tert-butyl peroxy)-3-hexyne, lauryl peroxide, and tert-butyl peracetate. A suitable azo compound is 2,2'-azo-bis(isobutyronitrile). The organic initiators have varying reactivities at different temperatures, and may generate different types of free radicals for grafting. One skilled in the art may select the appropriate organic initiator as needed for the grafting conditions.

The amount and type of initiator, the amount of maleic anhydride, as well as reaction conditions, including temperature, time, shear, environment, additives, diluents, and the like, employed in the grafting process, may impact the final structure of the maleated interpolymer. For example, the degree of maleic anhydride/succinic anhydride, their oligomers, and their derivatives, including hydrolysis products, grafted onto the grafted interpolymer may be influenced by the aforementioned considerations. Additionally, the degree and type of branching, and the amount of crosslinking, may also be influenced by the reaction conditions and concentrations. In general, it is preferred that crosslinking during the maleation process be minimized. The composition of the base olefin interpolymer may also play a role in the final structure of the maleated interpolymer. The resulting structure, will in turn, affect the properties and use of the final product. Typically, the amount of initiator and maleic anhydride employed will not exceed that, which is determined to provide the desired level of maleation and desired melt flow, each required for the functionalized interpolymer and its subsequent use.

The amount of initiator can vary, but for the adhesive applications of the invention, at least 100 ppm of initiator, or at least 250 ppm of initiator, based on the total amount of the reactive composition, is used. The initiator may be present in an amount from 250 ppm to 2500 ppm. All individual values and subranges between 250 ppm and 2500 ppm are included herein and disclosed herein.

The grafting reaction should be performed under conditions that maximize grafts onto the olefin-based polymer backbone, and minimize side reactions, such as the homopolymerization of the grafting agent, which is not grafted to the olefin interpolymer. It is not unusual that some fraction of the maleic anhydride (and/or its derivatives) does not graft onto the olefin-based polymer, and it is generally desired that the unreacted grafting agent be minimized. The grafting reaction may be performed in the melt, in solution, in the solid-state, in a swollen-state, and the like. The maleation may be performed in a wide-variety of equipment, such as, but not limited to, twin screw extruders, single screw extruders, BRABENDER™ mixers, batch reactors, and the like.

Blending the olefin-based polymer (without halogen) with the maleic anhydride and initiator in the first stage of an extruder, at melt temperatures typically from 100°C to 260°C, or from 120°C to 250°C, has produced sufficiently maleated resins. All individual temperature values and ranges from 100°C to 260°C are included herein and disclosed herein.

Additional embodiments of the invention provide for olefin-based polymers grafted with other carbonyl-containing compounds. In one embodiment, these grafted olefin-based polymers may have molecular weight distributions and/or densities the same or similar to those described above for the grafted maleic anhydride olefin-based polymers. In another embodiment, these grafted olefin-based polymers are prepared using the same or similar amounts of grafting compound and initiator, as those used for the grafted maleic anhydride olefin interpolymers, as described above. In another embodiment, these grafted olefin-based polymers contain the same or similar level of grafted compound as the amount of grafted maleic anhydride, as described above.

Additional carbonyl-containing compounds include, but are not limited to, dibutyl maleate, dicyclohexyl maleate, diisobutyl maleate, dioctadecyl maleate, N-phenylmaleimide, citraconic anhydride, tetrahydrophthalic anhydride, bromomaleic anhydride, chloromaleic anhydride, nadic anhydride, methylnadic anhydride, alkenylsuccinic anhydride, maleic acid, fumaric acid, diethyl fumarate, itaconic acid, citraconic acid, crotonic acid, esters thereof, imides thereof, salts thereof, and Diels-Alder adducts thereof.

*Functionalized and Halogenated Olefin-Based Polymers*

A preferred embodiment of the invention provides olefin-based polymers, and in particular, chlorinated ethylene-based polymers (or ethylene/alpha-olefin interpolymers), and chlorinated propylene-based polymers (or propylene/ethylene interpolymers), each functionalized (e.g., grafted) with maleic anhydride. The grafted maleic anhydride (g-MAH), chlorinated olefin-based polymer may or may not contain small amounts of hydrolysis product and/or other derivatives.

In one embodiment, the present invention provides functionalized, halogenated olefin-based polymers (sometimes referred to as halogenated, functionalized olefin-based polymers) and polymer blends comprising the same, and, in particular, chlorinated, g-MAH ethylene interpolymers. Or the halogenated, functionalized olefin-based polymers is a chlorinated, g-MAH ethylene/alpha-olefin interpolymer.

In another embodiment, the functionalized, halogenated olefin-based polymers, particularly chlorinated, g-MAH ethylene- or propylene-based interpolymers, have a melt viscosity from 10 cP to 100,000 centipoise (cP), or the melt viscosity is from 50 cP, or 100 cP, or 500 cP, or 1,000 cP, or 2,000 cP, 3,000 cP, or 4,000 cP, or 5,000 cP, to 80,000 cP or 60,000 cP, or 50,000 cP, or 40,000 cP, or 30,000 cP, or 20,000 cP, or 15,000 cP. All individual values and subranges from 10 cP to 100,000 cP are included and disclosed herein. In one embodiment, the halogenated, functionalized olefin-based polymers is a chlorinated, g-MAH ethylene/alpha-olefin interpolymer or propylene/ethylene interpolymer. Melt viscosity is measured using a Brookfield viscometer at 350°F (177°C).

If the functionalized, halogenated olefin-based polymer is a halogenated, functionalized ethylene-based polymer, particularly chlorinated, g-MAH ethylene interpolymer, then it typically has a melt index (12) from 50 grams per 10 minutes (g/10 min), or 100 g/10 min, or 200 g/10 min, or 300 g/10 min, or 400 g/10 min, to 3,500 g/10 min, to 3500 g/10 min, or 3,000 g/10 min, or 2500 g/10 min, or from 300 g/10 min to 2,000 g/10 min, or from 400 g/10 min to 1,500 g/10 min, as determined using ASTM D-1238 (190°C, 2.16 kg). All individual values and subranges from 200 g/10 min to 3,500 g/10 min are included herein and disclosed herein. Or the halogenated, functionalized olefin-based polymers is a chlorinated, g-MAH ethylene/alpha-olefin interpolymer.

If the functionalized, halogenated olefin-based polymer is a halogenated, functionalized propylene-based polymer, particularly chlorinated, g-MAH propylene interpolymer, then it typically has a melt index (12) from 50 grams per 10 minutes (g/10 min), or 100 g/10 min, or 200 g/10 min, or 300 g/10 min, or 400 g/10 min to 3,500 g/10 min, to 3500 g/10 min, or 3,000 g/10 min, or 2500 g/10 min, or from 300 g/10 min to 2,000 g/10 min, and more or from 400 g/10 min to 1,500 g/10 min, as determined using ASTM D-1238 (230°C, 2.16 kg). All individual values and subranges from 200 g/10 min to 3,500 g/10 min are included herein and disclosed herein. Or the halogenated, functionalized olefin-based polymers is a chlorinated, g-MAH propylene/ethylene interpolymer.

In another embodiment, the functionalized, halogenated olefin-based polymers, particularly chlorinated, g-MAH ethylene- or propylene-based interpolymers, have a number average molecular weight (Mn) from 4,000 to 30,000, or from 5,000 to 25,000, and more or from 5,000 to 15,000. All individual values and subranges are included in the range 4,000 to 30,000, and disclosed herein. All molecular weights, as disclosed herein, have the unit "g/mole." Or the halogenated, functionalized olefin-based polymers is a chlorinated, g-MAH, ethylene/alpha-olefin interpolymer or a propylene/ethylene interpolymer.

In another embodiment, the functionalized, halogenated olefin-based polymers, particularly chlorinated, g-MAH ethylene- or propylene-based interpolymers, have a weight average molecular weight (Mw) from 35,000 to 150,000, or from 40,000 to 100,000, and more or from 745,000 to 80,000. All individual values and subranges are included in the range 50,000 to 150,000, and disclosed herein. All molecular weights, as disclosed herein, have the unit "g/mole." Or the halogenated, functionalized olefin-based polymers is a chlorinated, g-MAH ethylene/alpha-olefin interpolymer or a propylene/ethylene interpolymer.

In another embodiment, the functionalized, halogenated olefin-based polymers, particularly chlorinated, g-MAH ethylene- or propylene-based interpolymers, have a molecular weight distribution (MWD) from about 1.2 to 5.0, or from about 1.5 to 4.0, or from about 1.7 to 3.0, or 1.8 to 2.5. All individual values and subranges are included in the MWD range about 1.2 to 5.0, and disclosed herein. Or the halogenated, functionalized olefin-based polymers is a chlorinated, g-MAH ethylene/alpha-olefin interpolymer or propylene/ethylene interpolymer.

In another embodiment, the functionalized, halogenated olefin-based polymers, particularly chlorinated, g-MAH ethylene- or propylene-based interpolymers, have a density from 0.850 g/cc to 0.930 g/cc, or from 0.855 g/cc to 0.910 g/cc, or from 0.860 g/cc to 0.900 g/cc, and more or from 0.865 g/cc to 0.895 g/cc. All individual values and subranges are included in the density range 0.850 g/cc to 0.930 g/cc, and disclosed herein. In one embodiment, the halogenated, functionalized olefin-based polymers is a chlorinated, g-MAH ethylene/alpha-olefin interpolymer or propylene/ethylene interpolymer.

In one embodiment the chlorine content of the halogenated, functionalized olefin-based polymer is from 1 to 30 wt% based on the weight of the polymer.

In one embodiment the melting temperature (Tm) of the halogenated, functionalized olefin-based polymer is less than, or equal to, 175°C, or from -20°C to 120°C, or from 0°C to 100°C, or from 20°C to 100°C, or from 50°C to 100°C.

In one embodiment the glass transition temperature (Tg) of the halogenated, functionalized olefin-based polymer is from -50°C to 10°C, or from -40°C to 10°C, or from -30°C to 10°C, or from -20°C to 10°C, or from -10°C to 10°C.

In one embodiment, a blend of two of more olefin-based olefins is subject to halogenation and functionalization as described above. The functionalizing component, e.g., maleic anhydride, can be reacted with the polymers of the blend by blending the individual olefin-based polymers with the functionalizing component and initiator, if one is used, in the first stage of a reactor extruder. The process temperatures at which reaction (maleic anhydride grafting) takes place are typically from 100°C and 260°C, or from 120°C and 250°C, depending upon the residence time and the half-life of the initiator (again, assuming one is used). The grafting reaction should be performed under conditions that maximize grafts onto the polymer backbone, and minimize side reactions.

In one embodiment, the resin blend contains an ethylene interpolymer and a propylene interpolymer. Suitable ethylene interpolymers and propylene interpolymers include, but are not limited to, those described herein.

*Compositions Comprising Functionalized, Halogenated Olefin-Based Polymers*

The functionalized, halogenated olefin-based polymers used in the practice of this invention are blended with (1) at least one blend polymer, and/or (2) one or more tackifiers, to form the compositions of this invention. The addition of the blend polymer and/or tackifier forms a composition useful as an adhesive, particularly an adhesive for joining a fabric to a rubber substrate.

*Blend Polymer*

As here used, "blend polymer" means a polymer other than the functionalized, halogenated olefin-based polymer described above. Blend polymers can be the same or different than the olefin-based polymer used to make the functionalized, halogenated olefin-based polymer. Blend polymers are not olefin-based polymers that are both functionalized and halogenated. Typically, blend polymers are olefin-based polymers that are neither functionalized nor halogenated.

The blend polymer is an amorphous polyolefin (APO). APAO is a polymer of one or more alpha olefins (e.g. C2 to C10 olefins). An APO can be a homopolymer, copolymer or terpolymer. APO can be manufactured by use of heterogeneous stereospecific polymerization using Ziegler-Natta technology. Such methods are well known in the art and include those methods disclosed in USP 4,859,757; 4,847,340; 4,736,002 and 5,714,554.

In some embodiments the APO is a homopolymer or copolymer of propylene. In some embodiments, the APO comprises at least about 50%, or at least about 55 %, or at least 60% by weight of propylene, based on the weight of the APO. In other embodiments, the APO is a copolymer of at least two of ethylene, propylene and 1-butene.

The APO can have a melt viscosity less than, or equal to, 15,000 cP, or less than, or equal to, 10,000 cP, or less than, or equal to, 5,000 cP, or less than, or equal to, 4,000 cP, when tested at 190°C.

APO can have a melt viscosity greater than, or equal to, 500 cP, or greater than, or equal to, 1,000 cP, or greater than, or equal to, 1,500 cP, or greater than, or equal to, 2,000 cP, when tested at 190°C.

In one embodiment the glass transition temperature (Tg) of the APO is from -30°C to 0°C, or from -30°C to -5°C, or from -30°C to 10°C, or from -30°C to -10°C.

In one embodiment the weight average molecular weight (Mw) of the APO is from 5,000 to 60,000 g/mol, or from 10,000 to 50,000 g/mol, or from 15,000 to 50,000 g/mol.

The APO can have an open time (i.e., the amount of time that it takes for a film of adhesive to set to a destructive bond; typically determined as per ASTM D-4497) of at least about 10 seconds, at least about 20 seconds, at least about 40 seconds or even at least about 60 seconds.

In one embodiment, the APO or has a polydispersity index (Mw/Mn) of at least 2.0, at least 5.0, or at least 6.0, or even at least 7.0.

In one embodiment, APO or has a polydispersity index (Mw/Mn) of ≤ 15.0, or ≤ 12.0, or even ≤ 10.0.

Useful APO are commercially available from a number of sources, and commercially available products include, but are not limited to, REXTAC™ 2730 and REXTAC™ 2304 available from REXtac LLC (Odessa, Tex.); EASTOFLEX™ E1060 available from Eastman Chemical Company (Kingsport, Tenn.); and VESTOPLAST™ 708 and VESTOPLAST™ 508 available from Evonik Industries (Marl, Germany).

*Tackifiers*

Exemplary tackifying resins include, but are not limited to, aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof. Tackifying resins having a ring and ball softening point from 70°C to 150°C, will typically have a viscosity at 350°F (177°C), as measured using a Brookfield viscometer, of no more than 3,000 centipoise (cP). Useful examples include EASTOTAC™ H-100, H-115 and H-130, and H-142 from Eastman Chemical Co. in Kingsport, Tenn., which are partially hydrogenated cycloaliphatic petroleum hydrocarbon resins, with softening points of 100°C, 115°C and 130°C and 142°C, respectively. These resins are available in the E grade, R grade, L grade and W grade, indicating differing levels of hydrogenation, with E being the least hydrogenated and W being the most hydrogenated.

Other useful tackifying resins include ESCOREZ™ 5300, 5637 and 5400, partially hydrogenated cycloaliphatic petroleum hydrocarbon resins, and ESCOREZ™ 5600, a partially hydrogenated aromatic modified petroleum hydrocarbon resin. All of these resins are available from ExxonMobil Chemical Co., in Houston, Tex. Other tackifying resins include WINGTACK™ Extra, which is an aliphatic, aromatic petroleum hydrocarbon resin available from Goodyear Chemical Co., in Akron, Ohio; HERCOLITE™ 2100, a partially hydrogenated cycloaliphatic petroleum hydrocarbon resin; and ZONATAC™ 105 and 501 Lite, which are styrenated terpene resins made from d-limonene and available from Arizona Chemical Co., in Panama City, Fla.

*Adhesive Compositions*

The compositions of this invention are useful as adhesives, particularly hot melt adhesives (HMA). These compositions can be prepared by conventional techniques, such as melt blending the constituents of the formulation in a mixing device, with or without curing catalysts. These adhesive compositions of the present invention have viscosities which are amenable to application temperatures of less than 350°F (177°C). In a preferred embodiment, the adhesives are formulated with a chlorinated, g-MAH ethylene- or propylene based interpolymer.

In one embodiment, the functionalized, halogenated olefin-based polymers or blends, as described above, will or be present in amounts from 1 wt% to <100 wt%, or from 20 wt% to 80 wt%, or from 30 wt% to 60 wt%, based on the total weight of the composition. All individual values and subranges from 1 percent to <100 wt% are include herein and disclosed herein. Or, the functionalized, halogenated olefin-based polymers or blends will be present in an amount from 25 wt% to 95 wt%, more or from 30 wt% to 90 wt%, more or from 35 wt% to 85 wt%, and more or from 40 wt% to 80 wt%.

In another embodiment the composition contains at least the following: (a) from 50 to <100 wt%, or from 50 to 95 wt%, or from 50 to 90 wt% of at least one functionalized, halogenated olefin-based polymer (or a chlorinated, g-MAH ethylene/alpha-olefin interpolymer), having a density of 0.86 to 0.90 g/cc, and a melt viscosity at 350°F (177°C) of from 3,500 to 30,000 cP, and (b) from greater than (>) 0 to 50 wt%, or 5 to 45 wt%, or from 10 to 40 wt% of at least one tackifier and at least one blend polymer. The ratio of tackifier to blend polymer in the composition can range from 0:100 to 100:0. If both tackifier and blend polymer are present in the composition, then typically the range of the tackifier to blend polymer is 10: 90 to 90:10, or 20:80 to 80:20, or 30:70 to 70:30, or 40:60 to 60:40.

In one embodiment the melt viscosity of the composition is from 100 to 50,000 Pa-s at 177°C, or from 250 to 40,000Pa-s, or from 500 to 30,000 Pa-s.

In one embodiment the amount of tackifier in the composition is from 10 to 90 wt%, or from 30 to 70 wt%, or from 40 to 60 wt%, based on the weight of the composition.

In one embodiment the amount of APO in the composition is from 1 to 99 wt%, or from 5 to 95 wt%, or from 10 to 90 wt%, based on the weight of the composition.

In one embodiment the amount of APO in the composition is from 50 to 99 wt%, or from 60 to 95 wt%, or from 70 to 90 wt%, based on the weight of the composition.

In one embodiment the weight ratio of (A) functionalized, halogenated olefin-based polymer to (B) tackifier in the composition is 1:1, or 2:1, or 3:1, or 4:1, or 5:1.

In one embodiment the weight ratio of (A) functionalized, halogenated olefin-based polymer to (B) tackifier in the composition is from 1.0:1.0 to 5.0/1.0, or from 1.1:1.0 to 4.0:1.0, or 1.1:1.0 to 3.0:1.0, or from 1.1:1.0 to 2.0:1.0.

In one embodiment the weight ratio of (A) functionalized, halogenated olefin-based polymer to (B') olefin-based polymer having a density from 0.855 to 0.900 g/cc and an Mw of less than, or equal to, 60,000 g/mol in the composition is 1:1, or 2:1, or 3:1, or 4:1, or 5:1.

In one embodiment the weight ratio of (A) functionalized, halogenated olefin-based polymer to (B') olefin-based polymer having a density from 0.855 to 0.900 g/cc and an Mw of less than, or equal to, 60,000 g/mol in the composition is from 1.0:1.0 to 5.0/1.0, or from 1.1:1.0 to 4.0:1.0, or 1.1:1.0 to 3.0:1.0, or from 1.1:1.0 to 2.0:1.0.

*Additives and Fillers*

Stabilizers and antioxidants may be added to protect the composition from degradation, caused by reactions with oxygen, which are induced by such things as heat, light or residual catalyst from the raw materials. Such antioxidants are commercially available from Ciba-Geigy located in Hawthorn, N.Y., and include IRGANOX™ 565, 1010 and 1076, which are hindered phenolic antioxidants. These are primary antioxidants, which act as free radical scavengers, and may be used alone or in combination with other antioxidants, such as phosphite antioxidants, like IRGAFOS™ 168, available from Ciba-Geigy. Phosphite antioxidants are considered secondary antioxidants that are not generally used alone, and are primarily used as peroxide decomposers. Other available antioxidants include, but are not limited to, CYANOX™ LTDP, available from Cytec Industries in Stamford, Conn., and ETHANOX™ 1330, available from Albemarle Corp. in Baton Rouge, La. Many other antioxidants are available for use by themselves, or in combination with other such antioxidants. When employed, the antioxidant is typically present in an amount less than 1.0 weight percent, or less than 0.5 weight percent, based on the total weight of the composition.

The composition may further comprise an oil. Oils are typically employed to reduce the viscosity of the composition. When employed, oils will be present in an amount less than 50, or less than 40, and more or less than 35 weight percent, based on the weight of the composition. Exemplary classes of oils include, but are not limited to, white mineral oil (such as KAYDOL™ oil available from Witco), and SHELLFLEX™ 371 naphthenic oil (available from Shell Oil Company) and CALSOL™ 5550 (naphthenic oil from Calumet Lubricants).

Other polymeric additives include, but are not limited to, ultraviolet light absorbers, antistatic agents, pigments, dyes, nucleating agents, fillers slip agents, fire retardants, plasticizers, processing aids, lubricants, stabilizers, smoke inhibitors, viscosity control agents and anti-blocking agents.

*Process of Binding Rubber Substrate to Fabric*

*Rubber Substrate*

The compositions of this invention are particularly useful in binding a fabric to a rubber substrate. The substrate is typically in the form of a sheet, and can comprise any rubber, natural or synthetic. Synthetic rubbers include, but are not limited to, polyacrylate rubber, ethylene acrylate rubber, polyester urethane, polybutadiene, polychloroprene, ethylene propylene (EP), ethylene propylene diene monomer (EPDM), polyether urethane, perfluorocarbon rubber, polyisoprene, acrylonitrile butadiene (NBR), polysiloxanes, styrene ethylene butylene styrene (SEBS), styrene butadiene (SBR), and the like. The compositions of this invention are particularly useful in binding a fabric to a substrate comprising, consisting essentially of, or consisting of, EPDM.

*Fabric*

The composition of the fabric used in the practice of this invention can vary widely. Virtually any woven or knitted material can be used and include, but are not limited to, such materials as cotton, wool, silk, rayon and any of the various synthetics such as nylon, polyethylene terephthalate (PET) fabric, KEVLAR™ para-aramid synthetic fabric, nonwoven polyethylene and/or polypropylene fabrics, and the like. The fabric is typically in the form of a cloth the surface of which can also vary widely, e.g., smooth, crinkle, crimped, grained, etc. The physical dimensions, e.g., thickness, looseness or tightness of the weave, denier of the fiber, etc., can also vary widely. In one embodiment the fabric comprises cotton.

*Process Steps*

*Lamination Adhesive*

In one embodiment the composition of this invention is used as a lamination primer. In this embodiment, the composition typically comprises a functionalized, halogenated olefin-based polymer, e.g., g-MAH chlorinated ethylene/alpha-olefin polymer, in combination with a blend polymer, e.g., g-MAH SEBS. Typically the composition is dissolved in any suitable solvent, e.g., a hydrocarbon such as methylcyclohexane or toluene, at a concentration of 1-30 wt% of composition in solvent, to form a primer. The primer is then applied to a surface of one or both of the fabric, e.g., cotton fabric, and rubber substrate, e.g., EPDM sheet, in an amount of 0.5 to 50 grams per square meter. In one embodiment the fabric is pretreated with a conventional primer, e.g., a resin formaldehyde latex (RFL).

The fabric and/or rubber substrate to which the primer is applied may be first heated to a mild temperature, e.g., between 40°C and 80°C. After application, the primer is typically dried at a temperature between 100°C and 200°C and once dried, the surface of the fabric and/or rubber substrate which carries the primer is contacted with a surface (primed or not primed) of the other component of the lamination. The lamination is then subjected to pressure, e.g., 1 to 40 pounds per foot (lb/ft), or 5 to 30 lb/ft, or 10 to 20 lb/ft, at a temperature of 35°C to 60°C. The pressure is typically applied by running a roller over the lamination, or passing the lamination through a pair of nip rollers.

*Hot Melt Application*

In one embodiment the composition of this invention is used as a hot melt adhesive (HMA). In this embodiment, the composition typically comprises a functionalized, halogenated olefin-based polymer, e.g., g-MAH chlorinated ethylene/alpha-olefin polymer, in combination with one or both of a blend polymer, e.g., APAO, and a tackifier, e.g., a synthetic hydrocarbon or a natural rosin ester. The blend polymer is typically present in an amount of >0 to 40 wt%, more typically 5 to 40 wt%, and the tackifier in an amount of 0 to 40 wt%. In one embodiment, the composition further comprises a diluent plasticizer, e.g., a paraffinic or naphthenic oil in an amount of 0 to 40 wt%. In these HMA embodiments the functionalized, halogenated olefin-based polymer typically comprises from 1 to 99 wt%, more typically from 20 to 80 wt%, even more typically from 30 to 70 wt% of the composition. In these HMA embodiments the composition is not mixed with a solvent.

When used as a hot melt adhesive, the composition is typically applied as a spray or by slot coating. The composition is typically heated to a temperature of 125°C to 175°C such that it has a viscosity of 500 to 10,000 mPa-s. The HMA is applied to a surface of one or both of the fabric, e.g., a cotton fabric, and the rubber substrate, e.g., an EPDM sheet, at a typical rate of 0.5 to 50 grams per square meter. In one embodiment the fabric is pretreated with a conventional primer, e.g., a resin formaldehyde latex (RFL). The sprayed surface of the rubber sheet and/or fabric is then contacted with a surface of the other (sprayed or not sprayed) lamination component, and the joined rubber sheet and fabric are then subjected to pressure, e.g., 1.49 to 59.53 kg/m (1 to 40 pounds per foot (lb/ft)), or 7.44 to 44.65 kg/m (5 to 30 lb/ft), or 14.88 to 29.76 kg/m (10 to 20 lb/ft), at a temperature of 35°C to 60°C.

The pressure is typically applied by running a roller over the lamination, or passing the lamination through a pair of nip rollers. In one embodiment the composition after it has been applied to a surface of the rubber sheet and/or fabric is allowed to moderately cool before the surface of the other component is applied to it although it will not typically cool to room temperature (23°C) before the two layers of the lamination are joined to one another.

*Articles*

The compositions of this invention are particularly useful in the manufacture of belts and hoses. These articles typically comprise one or more laminations of a rubber sheet, e.g., an EPDM rubber sheet, and a fabric, e.g., a cotton fabric. These constructions are then formed into a desired shape. The compositions of this invention impart a strong adhesion between the rubber sheet and fabric which protects against delamination under stressed conditions.

EXAMPLES

*Test Methods*

*Melt Viscosity*

Melt viscosity is determined in accordance with the following procedure, using a Brookfield Laboratories DVII+ Viscometer and disposable aluminum sample chambers. The spindle used, is a SC-31 hot-melt spindle, suitable for measuring viscosities in the range of from 10 to 100,000 centipoises. The sample is poured into the chamber, which is in turn, inserted into a Brookfield Thermosel, and locked into place. The sample chamber has a notch on the bottom that fits the bottom of the Brookfield Thermosel to ensure that the chamber is not allowed to turn when the spindle is inserted and spinning. The sample is heated to the required temperature, until the melted sample is about 1 inch (approximately 8 grams of resin) below the top of the sample chamber. The viscometer apparatus is lowered and the spindle submerged into the sample chamber. Lowering is continued until brackets on the viscometer align on the Thermosel. The viscometer is turned on, and set to operate at a shear rate which leads to a torque reading in the range of 30 to 60 percent. Readings are taken every minute for about 15 minutes, or until the values stabilize, at which point, a final reading is recorded.

*Gel Permeation Chromatography*

The average molecular weights and molecular weight distributions for ethylene-base polymers are determined with a chromatographic system consisting of either a Polymer Laboratories Model PL-210 or a Polymer Laboratories Model PL-220. The column and carousel compartments are operated at 140°C for polyethylene-based polymers. The columns are three Polymer Laboratories 10-micron, Mixed-B columns. The solvent is 1,2,4-trichlorobenzene. The samples are prepared at a concentration of 0.1 gram of polymer in 50 milliliters of solvent. The solvent used to prepare the samples contains 200 ppm of butylated hydroxytoluene (BHT). Samples are prepared by agitating lightly for 2 hours at 160°C. The injection volume is 100 microliters, and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)):

$$M_{polyethylene} = A(M_{polystyrene})^{B}$$

where M is the molecular weight, A has a value of 0.4315 and B is equal to 1.0. Polyethylene equivalent molecular weight calculations are performed using VISCOTEK™ TriSEC software Version 3.0. The molecular weights for polypropylene-based polymers can be determined using Mark-Houwink ratios according to ASTM D6474.9714-1, where, for polystyrene a = 0.702 and log K = -3.9, and for polypropylene, a = 0.725 and log K = -3.721. For polypropylene-based samples, the column and carousel compartments are operated at 160°C.

*Melt Index*

By the term "MI," is meant melt index, 12, in g/10 min, measured using ASTM D-1238-03, Condition 190°C/2.16 kg for polyethylene based sample (Condition 230°C/2.16 kg for polypropylene based sample). Melt indexes are also determined from Brookfield viscosity as described in USP 6,335,410; 6,054,544 and 6,723,810.

*Differential Scanning Calorimetry (DSC)*

Differential Scanning Calorimetry (DSC) is used to measure crystallinity in polyethylene (PE) based samples and polypropylene (PP) based samples. A sample is pressed into a thin film at a temperature of 190°C. About five to eight milligrams of film sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C. for PP), and kept isothermally at that temperature for three minutes. The sample is next heated at a rate of 10°C/min, until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (e.g., for PE, % cryst. = ($H_f$/292 J/g)100; and for PP, % cryst. = ($H_f$/165 J/g)100).

Unless otherwise stated, melting point(s) (Tm) of each interpolymer sample (base polymer, g-MAH polymer) is determined from the second heat curve obtained from DSC, as described above. The crystallization temperature (Ta) is measured from the first cooling curve.

*Density*

Density is measured in accordance with ASTM D-792-00. The density measured was a "quick density", meaning that the density was determined after 1 hour from the time of molding.

*Brookfield Viscosity Measurement*

Melt viscosity was measured using a Brookfield Viscometer Model DV-II equipped with a Brookfield Thermosel™ System. Melt viscosity of blends and HMA formulations was determined at 177°C using spindle 31.

*Adhesive Peel Strength Testing*

The adhesive peel strength of the glued cotton fabric to the EPDM is measured using ASTM D904-98. Specimens are die cut strips that are one inch in width. Specimens are pulled at 10 in/min on an Instron test frame. The result is either a measure of the force required to pull or separate the film layer from a substrate; or in the case of coextruded film layers, the force required to pull one layer apart from another layer. Data reported is peak load and average load in Newtons (N); the peak load is reported at the peak of the extension curve and the average load is between 1" and 4" extension.

*Materials*

*Functionalized, Halogenated Olefin-Based Polymer*

HARDLEN™ F2P, a g-MAH, chlorinated polyolefin from Toyobo, having an Mw of 75,000 g/mol, MA content of 1.6 wt%, chlorine content of 20 wt%, Tm of 72°C, Tg of 8°C, and a solution viscosity of 60 mPa*s (20 wt% in toluene, 25°C). The product is 100% solids and provided in the form of pellets. This product is referred to as "MAH-g-CPO".

*Blend Polymer*

KRATON™ FG1901, a g-MAH-SEBS rubber. It is a clear, linear triblock based on styrene and ethylene/butylene with a polystyrene content of 30%. It has a melt flow of 14-28 g/10 min (230°C/5000g) by ASTM D1238, a MA content of 1.4-2.0 by Bound BAM 1026, and water of 500 ppmw by BAM 1024.
EASTOFLEX™ E2030, an amorphous polyolefin available from Eastman Chemical. It is a saturated, low molecular weight propylene-based polymer. Brookfield viscosity 3,000 cP (190°C) (ASTM D 3236), ring and ball softening point 135°C (ASTM E 28), Tg of -23°C (ASTM D3418), and a Mw from 20,000 to 50,000 g/mole.

*Tackifier*

REGALITE™ C6100 is a very light color, partially hydrogenated, modified aliphatic resin available from Eastman Chemical.

*Oil*

CALSOL™ 550 is a heavy hydro treated naphthenic distillate available from Calumet Lubricants. It is a clear, pale-straw to water-white, viscous liquid.

*Antioxidant*

IRGANOX™ *1010* is pentaerythritol tetrakis(3-(3,5-di-tert-butyl-4-hydroxyphenyl)-propionate) available from BASF.

*Fabric*

Fabric is untreated cotton with a weight of 937, typical of that used to reinforce belting compounds such as EPDM.

*EPDM*

An EPDM, uncured compound was compounded according to the following recipe. The formulation (Table 1) was shear mixed in a BANBURY mixer (starting from room temperature), and then milled into flat blankets using a roll-mill. The formulation was mixed using a FARREL BR BANBURY Mixer (1.5L volume) using an upside down mixing method. The polymer was weighed in with the sulfur and other dry ingredients, and fluxed at a slow-speed for 2.5 minutes, at 66°C; the accelerator was added, and then the mixture was further fluxed, and then dropped at 110°C. A 15.24 cm (6") Reliable Roll Mill was then used to complete the mixing and to mill an uncured blanket.
The EPDM material is compression molded into a 10.16 cm x 15.24 cm, 0.32 cm (4 x 6", 1/8") sheet for testing.

Table 1

| EPDM Formulation | |
|---|---|
| Component | Amount (phr)* |
| NORDEL IP 3640 | 100 |
| Carbon black N330 HAF | 50 |
| Flexon™ 815 paraffinic oil | 15 |
| HI-SIL™ 233 | 20 |
| Sartomer™ SR350 | 3.0 |
| Structol™ WB212 | 2.0 |
| Agerite™ Resin D | 1.0 |
| DiCup™ 40C | 6.0 |
| Total (phr) | 197.0 |
| *Parts per hundred dry rubber. | |

NORDEL IP 3640 hydrocarbon rubber is an amorphous, low-diene ethylenepropylene-diene terpolymer available from The Dow Chemical Company.

Carbon black N330 HAF is a high abrasion furnace black.

FLEXON™ 815 paraffinic oil is a high viscosity paraffinic oil available from ExxonMobil.

HI-SIL™ 233 is a synthetic, white, amorphous silicon dioxide in powder for reinforcing rubber available from PPG.

SARTOMER™ SR350 is trimethylolpropane trimethacrylate, a low volatility trifunctional monomer available from Arkema.

STRUCTOL™ WB212 is an emulsion plasticizer dispersing and processing additive blend of high molecular fatty acid esters and condensation products, bound to chemically inert fillers, available from Struktol.

AGERITE™ Resin D is a powder, lower-melting hydroquinoline antioxidant.

DiCup™ 40C is dicumene hydroperoxide available from Arkema.

*Hot Melt Adhesive (HMA) Compounding/Formulation*

Components for the HMA compound (Table 2) were weighed into an aluminum can 7.62 cm (3") diameter x 15.24 cm (6") long) and preheated in an oven at 180°C for 30 minutes. The components were then further mixed in a heated block with the can at 180°C for 20 minutes using a Paravisc-style impeller at 100 rpm.

*Hot Melt Application of Adhesive to EPDM and Subsequent Gluing to Cotton Fabric*

The hot melt adhesive is applied to the EPDM substrate and glued to the cotton fabric using a drawdown method. The adhesive to be applied is heated to its molten and liquid state (approximately 180 C). On a flat surface, masking tape is applied to the top of the EPDM substrate to the flat surface to secure it in place. The cotton fabric is placed over top and taped across the top edge. A glass rod with the masking tape is placed in-between the top sheet of cotton and the EPDM sheet, at the top taped edge. Another glass rod is placed on top of the cotton fabric. The top sheet of the cotton fabric is flipped over the top glass rod (one without tape). About a 2.54 cm (1") diameter puddle of adhesive is poured in front of the glass rod. The two glass rods are quickly slide down and draw along the surface of the cotton fabric. This forms the bonded area between the EPDM substrate and cotton fabric. The applied coating weight was calculated by the weight of the adhesive (in gram units) that was applied to the substrate divided by the unit area of the substrate (in meters squared). The results are reported in Table 3 and the Figure.

**EP 3 292 178 B1**

Table 2

| | HMA Formulations | | |
|---|---|---|---|
| Ingredient | Comparative Formulation 1 | Comparative Formulation 2 | Inventive Formulation 3 |
| HARDLEN™ F2P (90C) (g-MAH, Chlorinated Polyolefin) | 30 g | 25 g | 15 g |
| EASTOFLEX™ E2030 (amorphous polyalphaolefin) | | | 15 g |
| REGALITE™ 6100 (C5 Tackifier) | 40 g | 35 g | 40 g |
| CALSOL™ 550 (Oil) | 30 g | 40 g | 30 g |
| IRGANOX™ 1010 (0.5%) (Antioxidant) | 0.1 g | 0.1 g | 0.1 g |
| Total Weight (g) | 100.1 | 100.1 | 100.1 |

Table 3

| | Properties of Glued EPDM to Cotton Fabric | | |
|---|---|---|---|
| Ingredient | Comparative Formulation 1 | Comparative Formulation 2 | Inventive Formulation 3 |
| Average Peak Load (N) | 20.3 | 11.9 | 3.7 |
| Average Peel Strength (N) | 15.3 | 7.9 | 2.8 |
| Failure Type | Substrate (elongation + tearing/ destruction) | Substrate (elongation + stretching) | Adhesive |
| Coating Weight (gsm) | 300 | 300 | 300 |
| Brookfield Viscosity @ 177°C (Pa-s) | 333 | 195 | 230 |

**Claims**

1. A composition comprising at least the following:

    (A) A functionalized, halogenated olefin-based polymer having a melt index (12, 190C/2.16) greater than, or equal to, 30 grams per 10 minutes (g/10 min); and
    (B') An olefin-based polymer having a density from 0.855 to 0.900 grams per cubic centimeter (g/cc) and a weight average molecular weight (Mw) of less than, or equal to, 60,000 grams per mole (g/mol),

    wherein the olefin-based polymer of component B' is an amorphous polyolefin (APO),
    wherein the term "functionalized, halogenated olefin-based polymer," refers to an olefin-based polymer comprising at least one halogen, and at least one chemical group selected from the following: anhydride, carboxylate, -COOH, amine, OH, carbonyl, acrylate, or combinations thereof.

2. The composition of Claim 1, in which the functionalized, halogenated olefin-based polymer is a functionalized, halogenated ethylene-based polymer.

3. The composition of Claim 1, in which the functionalized, halogenated olefin-based polymer is a functionalized, halogenated propylene-based polymer.

4. The composition of Claim 1, in which the functionalized, halogenated olefin-based polymer is a functionalized, chlorinated ethylene-based polymer or a functionalized, chlorinated propylene-based polymer.

5. The composition of Claim 4, in which the functionalized, chlorinated ethylene-based polymer or the functionalized, chlorinated propylene- based polymer comprises at least one of an anhydride, carboxylic acid, hydroxyl, amine, or a combination thereof.

6. The composition of Claim 1 in which the APO is an ethylene-based polymer or a propylene-based polymer.

7. The composition of Claim 1, further comprising a tackifier.

8. An article comprising the composition of Claim 1.

9. The composition of Claim 1 in which the functionalized, halogenated olefin-based polymer is a chlorinated, g-MAH ethylene/alph-olefin interpolymer or propylene/ethylene interpolymer.

10. The composition of Claim 9 in which the maleic anhydride content of the polymer is from 0.5 to 5 wt%.

11. The composition of Claim 1 in which the functionalized, halogenated olefin-based polymer has a weight average molecular weight (Mw) from 40,000 to 100,000 g/mol.

12. The composition of Claim 1 in which the functionalized, halogenated olefin-based polymer has a melting temperature (Tm) from 50° to 100°C.

13. The composition of Claim 1 in which the functionalized, halogenated olefin-based polymer has a glass transition temperature (Tg) from -20° to 10°C.

**Patentansprüche**

1. Eine Zusammensetzung, die mindestens Folgendes beinhaltet:

   (A) ein funktionalisiertes, halogeniertes Polymer auf Olefinbasis, das einen Schmelzindex (I2, 190 °C/2,16) von mehr als oder gleich 30 Gramm pro 10 Minuten (g/10 min) aufweist; und
   (B') ein Polymer auf Olefinbasis, das eine Dichte von 0,855 bis 0,900 Gramm pro Kubikzentimeter (g/cm$^3$) und ein Molekulargewicht im Gewichtsmittel (Mw) von weniger als oder gleich 60 000 Gramm pro Mol (g/mol) aufweist,

   wobei das Polymer auf Olefinbasis von Komponente B' ein amorphes Polyolefin (APO) ist,
   wobei sich der Begriff "funktionalisiertes, halogeniertes Polymer auf Olefinbasis" auf ein Polymer auf Olefinbasis bezieht, das mindestens ein Halogen und mindestens eine chemische Gruppe beinhaltet, die aus Folgendem ausgewählt ist: Anhydrid, Carboxylat, -COOH, Amin, OH, Carbonyl, Acrylat oder Kombinationen davon.

2. Zusammensetzung gemäß Anspruch 1, wobei das funktionalisierte, halogenierte Polymer auf Olefinbasis ein funktionalisiertes, halogeniertes Polymer auf Ethylenbasis ist.

3. Zusammensetzung gemäß Anspruch 1, wobei das funktionalisierte, halogenierte Polymer auf Olefinbasis ein funktionalisiertes, halogeniertes Polymer auf Propylenbasis ist.

4. Zusammensetzung gemäß Anspruch 1, wobei das funktionalisierte, halogenierte Polymer auf Olefinbasis ein funktionalisiertes, chloriertes Polymer auf Ethylenbasis oder ein funktionalisiertes, chloriertes Polymer auf Propylenbasis ist.

5. Zusammensetzung gemäß Anspruch 4, wobei das funktionalisierte, chlorierte Polymer auf Ethylenbasis oder das funktionalisierte, chlorierte Polymer auf Propylenbasis mindestens eines von einem Anhydrid, einer Carbonsäure, einem Hydroxyl, einem Amin oder eine Kombination davon beinhaltet.

6. Zusammensetzung gemäß Anspruch 1, wobei das APO ein Polymer auf Ethylenbasis oder ein Polymer auf Propylenbasis ist.

7. Zusammensetzung gemäß Anspruch 1, die ferner einen Klebrigmacher beinhaltet.

**8.** Ein Artikel, der die Zusammensetzung gemäß Anspruch 1 beinhaltet.

**9.** Zusammensetzung gemäß Anspruch 1, wobei das funktionalisierte, halogenierte Polymer auf Olefinbasis ein chloriertes g-MAH-Ethylen-alpha-Olefin-Mischpolymer oder -Propylen-Ethylen-Mischpolymer ist.

**10.** Zusammensetzung gemäß Anspruch 9, wobei der Maleinsäureanhydridgehalt des Polymers 0,5 bis 5 Gew.-% beträgt.

**11.** Zusammensetzung gemäß Anspruch 1, wobei das funktionalisierte, halogenierte Polymer auf Olefinbasis ein Molekulargewicht im Gewichtsmittel (Mw) von 40 000 bis 100 000 g/mol aufweist.

**12.** Zusammensetzung gemäß Anspruch 1, wobei das funktionalisierte, halogenierte Polymer auf Olefinbasis eine Schmelztemperatur (Tm) von 50 ° bis 100 °C aufweist.

**13.** Zusammensetzung gemäß Anspruch 1, wobei das funktionalisierte, halogenierte Polymer auf Olefinbasis eine Glasübergangstemperatur (Tg) von -20 ° bis 10 °C aufweist.

**Revendications**

**1.** Une composition comprenant au moins ce qui suit :

(A) un polymère à base d'oléfine halogéné fonctionnalisé ayant un indice de fluidité à l'état fondu (12, 190 °C/2,16) supérieur, ou égal, à 30 grammes par 10 minutes (g/10 min) ; et
(B') un polymère à base d'oléfine ayant une masse volumique allant de 0,855 à 0,900 grammes par centimètre cube (g/cm$^3$) et une masse moléculaire moyenne en poids (Mw) inférieure, ou égale, à 60 000 grammes par mole (g/mol),

où le polymère à base d'oléfine du constituant B' est une polyoléfine amorphe (APO), où le terme « polymère à base d'oléfine halogéné fonctionnalisé » se rapporte à un polymère à base d'oléfine comprenant au moins un halogène, et au moins un groupe chimique sélectionné parmi les suivants : anhydride, carboxylate, -COOH, amine, OH, carbonyle, acrylate, ou des combinaisons de ceux-ci.

**2.** La composition de la revendication 1, dans laquelle le polymère à base d'oléfine halogéné fonctionnalisé est un polymère à base d'éthylène halogéné fonctionnalisé.

**3.** La composition de la revendication 1, dans laquelle le polymère à base d'oléfine halogéné fonctionnalisé est un polymère à base de propylène halogéné fonctionnalisé.

**4.** La composition de la revendication 1, dans laquelle le polymère à base d'oléfine halogéné fonctionnalisé est un polymère à base d'éthylène chloré fonctionnalisé ou un polymère à base de propylène chloré fonctionnalisé.

**5.** La composition de la revendication 4, dans laquelle le polymère à base d'éthylène chloré fonctionnalisé ou le polymère à base de propylène chloré fonctionnalisé comprend au moins un élément parmi un anhydride, un acide carboxylique, un hydroxyle, une amine, ou une combinaison de ceux-ci.

**6.** La composition de la revendication 1 dans laquelle l'APO est un polymère à base d'éthylène ou un polymère à base de propylène.

**7.** La composition de la revendication 1, comprenant en outre un agent collant.

**8.** Un article comprenant la composition de la revendication 1.

**9.** La composition de la revendication 1 dans laquelle le polymère à base d'oléfine halogéné fonctionnalisé est un interpolymère d'éthylène/alpha-oléfine g-MAH chloré ou un interpolymère de propylène/éthylène.

**10.** La composition de la revendication 9 dans laquelle la teneur en anhydride maléique du polymère va de 0,5 à 5 % en poids.

**11.** La composition de la revendication 1 dans laquelle le polymère à base d'oléfine halogéné fonctionnalisé a une masse moléculaire moyenne en poids (Mw) allant de 40 000 à 100 000 g/mol.

**12.** La composition de la revendication 1 dans laquelle le polymère à base d'oléfine halogéné fonctionnalisé a une température de fusion (Tm) allant de 50 ° à 100 °C.

**13.** La composition de la revendication 1 dans laquelle le polymère à base d'oléfine halogéné fonctionnalisé a une température de transition vitreuse (Tg) allant de -20 ° à 10 °C.

Figure

Peel Strength of EPDM to Cotton Fabric

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007146875 A
- US 2003096907 A
- EP 1006234 A1
- US 7256235 B
- US 7737208 B
- US 20020032284 A
- US 20030212209 A
- US 20060074181 A
- US 6335410 B
- US 6054544 A
- US 6723810 B
- US 5272236 A
- US 5278272 A
- US 5064802 A
- US 5132380 A
- US 5703187 A
- US 6034021 A
- US 5321106 A
- EP 0468651 A
- WO 6118013 A
- EP 0514828 A
- WO 9319104 A
- US 5374696 A
- US 5532394 A
- US 5723398 A
- WO 9500526 A
- US 5470993 A
- US 5556928 A
- US 5624878 A
- US 5044438 A
- US 5057475 A
- US 5096867 A
- US 5324800 A
- WO 9400500 A
- WO 2005028584 A1
- WO 2006069205 A
- US 2926159 A
- US 5869591 A
- US 5977271 A
- US 5911940 A
- US 6124370 A
- US 5849828 A
- US 5814708 A
- US 5717039 A
- US 5753774 A
- US 5723550 A
- US 5030399 A
- US 4532302 A
- US 4308215 A
- US 4184988 A
- US 4157432 A
- US 4148821 A
- US 4859757 A
- US 4847340 A
- US 4736002 A
- US 5714554 A

### Non-patent literature cited in the description

- *Polymer Journal,* 2005, vol. 37 (9), 661-668
- **WILLIAMS ; WARD.** *J. Polym. Sci., Polym. Let.,* 1968, vol. 6, 621